(19) **Europäisches Patentamt / European Patent Office / Office européen des brevets**

(11) **EP 4 632 518 A1**

(12) # EUROPEAN PATENT APPLICATION

(43) Date of publication:
**15.10.2025  Bulletin 2025/42**

(21) Application number: **24168967.8**

(22) Date of filing: **08.04.2024**

(51) International Patent Classification (IPC):
**G05D 1/246** (2024.01)  **G05D 1/247** (2024.01)
**G05D 1/644** (2024.01)  **G05D 1/693** (2024.01)
**G05D 105/28** (2024.01)  **G05D 107/70** (2024.01)
**G05D 111/30** (2024.01)  **G05D 109/10** (2024.01)

(52) Cooperative Patent Classification (CPC):
**G05D 1/693; G05D 1/246; G05D 1/247;**
**G05D 1/644;** G05D 2105/28; G05D 2107/70;
G05D 2109/10; G05D 2111/32

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **Siemens Aktiengesellschaft**
**80333 München (DE)**

(72) Inventor: **Martinez Alba, Alberto**
**81379 München (DE)**

(74) Representative: **Siemens Patent Attorneys**
**Postfach 22 16 34**
**80506 München (DE)**

(54) **PATH EVALUATION SYSTEM, EXPLORATION DEVICE, METHOD TO OPERATE AN EXPLORATION DEVICE, COMPUTER PROGRAM PRODUCT AND COMPUTER-READABLE STORAGE MEDIUM**

(57) The invention relates to a path evaluation system (10) for coordinating autonomously guided vehicles (14) within an operational area of a mobile radio access network (18), wherein the path evaluation system (10) comprises an exploration device (50), configured to monitor an uncertainty map (40) and a robust path (34) for fulfilment of at least one predefined condition indicating an incipient runaway effect and, if the at least one condition is fulfilled, to perform a predefined measure to prevent an occurrence of the runaway effect.

FIG 1

EP 4 632 518 A1

**Description**

The invention is related a path evaluation system for coordinating autonomously guided vehicles within an operational area, an exploration device, a method to operate an exploration device, a computer program product and a computer-readable storage medium.

Automated guided vehicles are used in many diverse scenarios, such as industrial environments, rescue operations, packet delivery, etc. Autonomously guided vehicles need to be connected to a mobile radio access network wirelessly. When in charge of a task, autonomously guided vehicles need to go from their current position to a new destination in an energy-efficient manner while fulfilling connectivity constraints related to the mobile radio access network or even maximizing a quality of service (QoS) related to the mobile radio access network. Usually, autonomously guided vehicles do not calculate the path required to reach their destination themselves, but rely on an upper-level function that has access to global information about the considered area, that is, the area where autonomously guided vehicles can move.

In order to either guarantee or maximize QoS levels with respect to the mobile radio access network, it is often required for this upper-level function to know the expected signal to interference and noise ratio (SINR) values at every position in the considered area. A set of all estimated signal to interference and noise ratio values for the considered area is known as a radio map. The actual radio map is, in general, not truly known, but it must be estimated from available, limited information, such as recent positionwise measurements.

Consequently, any radio map estimation comes with uncertainty, which, in general, may be also estimated for every position in the considered area. Uncertainty values may be reduced by performing actual signal to interference and noise ratio measurements at selected positions, but they inevitably increase over time and distance to these measured positions. That is, positions that are far away form a recently measured position will exhibit large uncertainty values, as possible changes in their surroundings e. g. presence of persons or machines may result in experienced signal to interference and noise ratio values that differ largely from the expected ones.

When planning autonomously guided vehicle paths under QoS constraints, it is reasonable to opt for those paths comprising positions whose uncertainty levels are small and/or whose foreseen signal to interference and noise ratio values are surely above minimum levels, to ensure that they these QoS constraints are not violated. This approach is referred to as robust optimization. This, however, has two problems. First, a shorter, lower-energy path might still exist with acceptable or better QoS, but the uncertainty estimation may prevent us from using it. Second, opting always for low-uncertainty areas may cause a runaway effect, since uncertainty values in those low-uncertainty areas are kept low by frequent autonomously guided vehicle visits, whereas higher-uncertainty, unvisited areas never benefit from new measurements and thus uncertainty reduction. As a result, autonomously guided vehicles may be stuck with a limited set of possible regions to visit, leading to highly suboptimal but still constraint-meeting paths. In the worst case, this runaway effect may yield uncertainty estimations so flawed that no solutions are found for unusual origin-destination pairs.

The problem of finding the optimal paths for autonomously guided vehicle movements has been extensively tackled by previous work. Nonetheless, the vast majority of the works address the short-term problems of finding and scheduling paths while maximizing a performance indicator while being restricted by others, such as signal quality, distance, delay, QoS, etc.

In "Connectivity maintenance using a quality of service-based robot path planning algorithm", US Patent No. 9.216,508 B2, by R. M Ruuspakka et al., the authors propose a system and set of methods for selecting the path to be followed by a robot towards a target location based on signal quality metrics. In addition, path calculation may be performed while taking into signal quality thresholds, such as minimum bandwidth threshold, so that QoS is guaranteed during movement. Nonetheless, this patent does not address the problem of badly evolving uncertainty estimations that might result from autonomously guided vehicle movements, since the uncertainty and minimum thresholds are assumed to be always correct.

In "Radio Frequency Signal Strength Based Multitarget Tracking With Robust Path Planning", by L. Tindall et al., the authors present a technique to calculate the path of moving robots that includes robust optimization in order to ensure a minimum QoS level. Once again, this solution focuses on one-shot problems and pre-computed uncertainty estimations, without considering potential negative long-term effects of updating uncertainty with robot measurements.

In "UAV Path Planning With QoS Constraint in Device-to-Device 5G Networks Using Particle Swarm Optimization", by L. Shi et al., the authors extend existing algorithms tackling path planning of autonomous robots (unmanned aerial vehicles, in their case) to take into account QoS constraints. The possibility of encountering inaccurate signal strength estimations, which complicates the path finding problem in the short and long term, is mentioned, but no special measure is taken to address it.

Similarly, in "QoS-Aware UAV Coverage path planning in 5G mmWave network" by L. Shi et al., the authors present a similar problem but considering mmWave networks, such as those found in large indoor areas. Nevertheless, the possibility of negative feedback loops in uncertainty estimation is not addressed.

It is an object of the present invention to provide a solution to prevent the runaway effect in uncertainty estimation in a path evaluation system.

This objective is achieved by the respective subject matter of the independent claims. Further implementations and preferred embodiments are subject matter of the dependent claims.

The first aspect of the present invention relates to a path evaluation system for coordinating autonomously guided vehicles within an operational area. The path evaluation system comprises a path calculator device. The path calculator device is configured to receive a path request message , requesting a provision of a robust path for an autonomously guided vehicle, wherein the robust path specifies an optimal spatial progression with respect to at least one predefined path criterion from a starting position to a destination position along which a predefined minimum signal-to-noise and interference ratio is maintained. The at least one predefined path criterion can comprise the provision of the shortest path, the fastest path or the path of maximum QoS. Several of the predefined path criteria can also be provided, which may be weighted with respective weighting factors.

In other words, the path calculator device is configured to receive the path request message. The path request message may be sent by the autonomously guided vehicle or a device requesting a service of the autonomously guided vehicle. The path request message comprises the starting position and the destination position. The starting position may be a current position of the autonomously guided vehicle within the operational area. The destination position may be a position to be reached by the autonomously guided vehicle within the operational area. The path request message comprises a request to provide the autonomously guided vehicle with the robust path from the starting position to the destination position. A signal-to-noise and interference ratio along the requested robust path has to be equal or above the predefined minimum signal-to-noise and interference ratio.

The path calculator device is configured to determine the path for the autonomously guided vehicle with respect to the at least one predefined path criterion along which the predefined minimum signal-to-noise and interference ratio is maintained. In other words, the predefined minimum signal-to-noise and interference ratio must be satisfied along the path to be provided to the autonomously guided vehicle. The path is evaluated by robust optimization depending on a radio map and an uncertainty map. In other words, the path calculator is configured to determine the path by solving a robust optimization problem. The path calculator device is configured to evaluate the path by robust optimization. In other words, the path calculator device is configured to evaluate the path by solving a robust optimization problem, to provide the path that is a best solution from all solutions for the at least one predefined path criterion, wherein the signal-to-noise and interference ratio along the path is equal to or greater than the predefined minimum signal-to-noise and interference ratio.

To maintain the minimum signal-to-noise and interference ratio, the path calculator is configured to consider a radio map and an uncertainty map in the robust optimisation. The radio map describes a signal-to-noise and interference ratio of the mobile radio access network within the operational area. The uncertainty map describes an uncertainty in the signal-to-noise and interference ratio of the mobile radio access network in the radio map within the operational area. In other words, the signal-to-noise and interference ratio may depend on the position within the operational area. The signal-to-noise and interference ratio of the radio map may be evaluated on the basis of measured signal-to-noise and interference ratio values and/or simulations. However, the signal-to-noise and interference ratio evaluated for the area of operation may have the uncertainty. The uncertainty may vary within the operating area. The uncertainty may depend on a number of measurements and/or on an age of the measurements and/or a quality of a simulation. The uncertainty map may describe the uncertainty of the signal-to-noise and interference ratio within the operational area. In order to determine the path which maintains the predefined minimum signal-to-noise and interference ratio, the path calculator device is configured to apply a predefined robust optimisation method using the radio map and the uncertainty map. The robust optimisation method determines the path for the autonomously guided vehicle that maintains the minimum signal-to-noise and interference ratio with respect to at least one predefined path criterion. The path calculator device is configured to send a path provision message comprising the path to the autonomously guided vehicle.

The path evaluation system comprises a radio map estimation device. The radio map estimation device is configured to receive a radio measurement message comprising a measured signal-to-noise and interference ratio measured by the autonomously guided vehicle at a respective measurement position along the path. The radio map estimation device is configured to update the radio map and the uncertainty map based on the measured signal-to-noise and interference ratio.

The path evaluation system comprises an exploration device, configured to monitor the uncertainty map and the robust path for fulfilment of at least one predefined condition indicating an incipient runaway effect. The exploration device is configured to perform a predefined measure to prevent an occurrence of the runaway effect, if the at least one condition is fulfilled. In other words, since the evaluation of the robust path involves the uncertainty map, a high overall uncertainty level of the uncertainty map or high local uncertainty levels in the uncertainty map may limit the progression of the robust path, leading to longer robust paths. This so-called runaway effect has to be prevented. In order to detect an incident runaway effect, the predefined condition is defined. The predefined condition is selected to indicate the incipient runaway effect. The at least one predefined condition is related to the uncertainty map and or the robust path evaluated by the path calculator device. Path calculator device may be configured to provide the robust path to the exploration device. The exploration device is configured to analyse the path to detect whether the at least one predefined condition is fulfilled by the robust path. The exploration device may be configured to check the uncertainty map after an update of the uncertainty map or within a predefined period to check whether the predefined condition is fulfilled by the uncertainty map. Is it is one condition is fulfilled the exploration device may control the path calculator device and or the fleet to prevent the occupants of the runaway effect. The predefined measure may be related to a change of the robust path evaluation method and or an active control of an autonomously guided vehicle.

According to a further embodiment of the invention, the exploration device is configured to, as the a predefined measure, adapt the robust optimization to evaluate the robust path specifying the optimal spatial progression with respect to the least one predefined path criterion and with respect to an uncertainty criterion, the uncertainty criterion being related to a reduction of an overall uncertainty level of the uncertainty map. In other words, the robust path provided by the path calculator device may not be suitable to prevent a runaway effect. It may be possible that the current robust optimisation provides paths following same roads through the operational area. Therefore measure out signal-to-noise and interference value is provided by the autonomously guided the goods may be restricted to measurement positions along the same roads. Therefore the exploration device is configured to change the robust optimisation to allow a provision of robust passes that are evaluated with respect to the at least one predefined path Terry on and with respect to the uncertainty criterion. The uncertainty criterion on may be related to a reduction of the overall uncertainty level of the uncertainty map. Therefore the path evaluation is adapted to reduce documents of the runaway effect.

According to a further embodiment of the invention the exploration device is configured to, as the a predefined measure, evaluate a rest position for the autonomously guided vehicle. The rest position is a position within a predefined distance to the target position of the autonomously guided vehicle. The rest position is a position to be targeted by the autonomously guided vehicle after the autonomously guided vehicle has reached the target position based on the uncertainty map, and is set into a predefined idle state. The rest position is evaluated by the exploration device as a function of the uncertainty map. The rest position may be evaluated by solving an optimisation problem to find the position within the predefined distance to attack position that allows a maximum reduction of a local global level of uncertainty of the uncertainty map. The exploration device is configured to control the autonomously guided vehicle to travel to the rest position when set in a predefined idle state and, to measure the signal to noise and interference ratio at the rest position and to send a measurement message comprising the measured signal to noise and interference ratio to the map calculator device. The embodiment has the advantage that the autonomously guided vehicle may be used to measure the signal-to-noise and interference ratio at the rest position after completing a task at the target position.

According to a further embodiment of the invention the exploration device is configured to, as the a predefined measure, evaluate a measurement position based on the uncertainty map, and to control an idle autonomously guided vehicle of the fleet to travel to the measurement position, to measure the signal to noise and interference ratio at the measurement position and to send a measurement message comprising the measured signal to noise and interference ratio to the map calculator device. In other words the exploration device may be configured to monitor or status of the autonomously guided vehicles of the fleet. The exploration device may determine whether an autonomously guided vehicle of the fleet as an active or in an idle state. To improve the uncertainty without disturbing active autonomously guided vehicles the exploration device may control an idle autonomously guided vehicle to measure the signal-to-noise interference ratio at the predefined measure position.

According to a further embodiment of the invention, the at least one predefined condition comprises an exceeding of a permissible length difference by a length difference between a length of the robust path and a length of an unconstrained path. The unconstrained path specifies an optimal spatial progression from the starting position to the destination position for the autonomously guided vehicle with respect to the at least one predefined path criterion independent of the minimum signal-to-noise and interference ratio along the reference path. In other words the robust path and the unconstrained path may be evaluated by the path calculator device. The robust path and that unconstrained path be provided to the exploration device. The exploration device may calculate a length of the robust path and the length of the unconstrained path. In general the robust path is longer than the unconstrained path, since the robust path is evaluated as a function of the signal-to-noise and interference ratio. High global or local uncertainty levels of the uncertainty map limit possible progressions of the robust path. Therefore it is possible to detect a runaway effect by observing the difference between the length of the robust path and the unconstrained path. A runaway effect is detected when the length difference exceeds a predefined permissible length difference.

According to further embodiment of the invention, the exploration device is configured to, upon an exceeding of the permissible length difference, control the path calculator device to cancel the sending of the path provision message comprising the path. In other words the exploration device is configured to prevent the path calculator device from providing the robust path to the autonomously guided vehicle, when the difference between the length of the robust path and the length of the unconstrained path exceeds the predefined permissible length difference.

The exploration device is configured to evaluate the measurement position based on the uncertainty map and the unconstrained path and to control the idle autonomously guided vehicle of the fleet to travel to the measurement position. In other words, the exploration device is configured to evaluate the predefined measurement position to reduce the uncertainty along the unconstrained path. The idle autonomously guided vehicle may be an autonomously guided vehicle of the fleet being is a predefined idle state.

The exploration device is configured to control the autonomously guided vehicle to measure to measure the signal to noise and interference ratio at the measurement position and to send a measurement message comprising the measured signal to noise and interference ratio to the map calculator device.

The exploration device is configured to control the path calculator device to recalculate the path after an update of the uncertainty map by the radio map estimator device and to send a path provision message comprising the path to the autonomously guided vehicle. In other words when the autonomously guided vehicle reaches the measurement position, it measures the signal-to-noise and interference ratio and provides the measured signal-to-noise and interference ratio to the map calculator device. Upon reception of the measured signal-to-noise and interference ratio, the map calculator device updates the radio map and the uncertainty map. As a result the uncertainty along the unconstrained path may be reduced. Therefore a calculated robust path may be closer to the unconstrained path.

The exploration device is configured to control the path calculator device to recalculate the robust path based on the updated uncertainty map and to provide the robust path to the autonomously guided vehicle. The embodiment has the advantage that the length of the robust path may be reduced by using the idle autonomously guided vehicle of the fleet.

According to a further embodiment of the invention the at least one predefined condition comprises an exceeding of a permissible uncertainty level by an overall uncertainty level of the uncertainty map. In other words, the overall uncertainty level of the uncertainty map may be calculated by the exploration device. The exploration device is configured to detect the fulfilment of the at least one predefined condition when the overall uncertainty level of the uncertainty map exceeds the permissible uncertainty level.

According to a further embodiment of the invention the at least one predefined condition comprises an exceeding of a permissible local uncertainty by a local uncertainty of the uncertainty map. In other words the exploration device is configured to monitor or local uncertainty of the uncertainty map. The local uncertainty may describe the uncertainty at a specific position or in a specific region of the uncertainty map. The exploration device is configured to detect the fulfilment of the at least one predefined condition when the local uncertainty exceeds the permission of the local uncertainty.

A second aspect of the present invention is related to the exploration device. The exploration device is configured to monitor the uncertainty map and the robust path for fulfilment of at least one predefined condition indicating an incipient runaway effect. The exploration device is configured to perform a predefined measure to prevent an occurrence of the runaway effect, if the at least one condition is fulfilled. In other words, since the evaluation of the robust path involves the uncertainty map, a high overall uncertainty level of the uncertainty map or high local uncertainty levels in the uncertainty map may limit the progression of the robust path, leading to longer robust paths. This so-called runaway effect has to be prevented. In order to detect an incident runaway effect, the predefined condition is defined. The predefined condition is selected to indicate the incipient runaway effect. The at least one predefined condition is related to the uncertainty map and or the robust path evaluated by the path calculator device. Path calculator device may be configured to provide the robust path to the exploration device. The exploration device is configured to analyse the path to detect whether the at least one predefined condition is fulfilled by the robust path. The exploration device may be configured to check the uncertainty map after an update of the uncertainty map or within a predefined period to check whether the predefined condition is fulfilled by the uncertainty map. Is it is one condition is fulfilled the exploration device may control the path calculator device and or the fleet to prevent the occupants of the runaway effect. The predefined measure may be related to a change of the robust path evaluation method and or an active control of an autonomously guided vehicle.

A third aspect of the present invention is related to a method to operate an exploration device. The method comprises a monitoring of an uncertainty map and a robust path evaluated by a path calculator device for fulfilment of at least one predefined condition indicating an incipient runaway effect. The method comprises a step of performing a predefined measure to prevent an occurrence of the runaway effect, if the at least one condition is fulfilled.

For use cases or use situations which may arise during the procedure and which are not explicitly described here, it may be provided that, in accordance with the procedure, an error message and/or a request for user feedback is issued and/or a default setting and/or a predetermined initial state is set.

A fourth aspect of the present invention is related to a computer program product comprising program code for performing a method according to the first aspect. The computer program product may also be regarded to a computer program.

A fifth aspect of the present invention is related to a computer-readable storage medium comprising at least the computer program product according to the fourth aspect.

The network optimization unit can be understood as a hardware module or as a software module. In particular, a module may also comprise a hardware and a software portion implemented on the hardware. A software module may be understood as a portion of software code functionally connected and combined to a unit. A software module may comprise or implement several processing steps and/or data structures. A method step of providing a software module may be understood to comprise providing a respective software code in a computer readable fashion on a computer readable storage medium.

Independent of the grammatical term usage, individuals with male, female or other gender identities are included within the term.

The path calculator device, the radio map estimator device, the exploration device and the autonomously guided vehicle may comprise computing units.

A computing unit may in particular be understood as a data processing device, which comprises processing circuitry. The computing unit may therefore in particular process data to perform computing operations. This may also include operations to perform indexed accesses to a data structure, for example a look-up table, LUT.

In particular, the computing unit may include one or more computers, one or more microcontrollers, and/or one or more integrated circuits, for example, one or more application-specific integrated circuits, ASIC, one or more field-programmable gate arrays, FPGA, and/or one or more systems on a chip, SoC. The computing unit may also include one or more processors, for example one or more microprocessors, one or more central processing units, CPU, one or more graphics processing units, GPU, and/or one or more signal processors, in particular one or more digital signal processors, DSP. The computing unit may also include a physical or a virtual cluster of computers or other of said units.

In various embodiments, the computing unit includes one or more hardware and/or software interfaces and/or one or more memory units.

A memory unit may be implemented as a volatile data memory, for example a dynamic random access memory, DRAM, or a static random access memory, SRAM, or as a non-volatile data memory, for example a read-only memory, ROM, a programmable read-only memory, PROM, an erasable read-only memory, EPROM, an electrically erasable read-only memory, EEPROM, a flash memory or flash EEPROM, a ferroelectric random access memory, FRAM, a magnetoresistive random access memory, MRAM, or a phase-change random access memory, PCRAM.

Further features of the invention are apparent from the claims, the figures and the figure description. The features and combinations of features mentioned above in the description as well as the features and combinations of features mentioned below in the description of figures and/or shown in the figures may be comprised by the invention not only in the respective combination stated, but also in other combinations. In particular, embodiments and combinations of features, which do not have all the features of an originally formulated claim, are also comprised by the invention. Moreover, embodiments and combinations of features which go beyond or deviate from the combinations of features set forth in the recitations of the claims are comprised by the invention.

In the following, the invention will be explained in detail with reference to specific exemplary implementations and respective schematic drawings. In the drawings, identical or functionally identical elements may be denoted by the same reference signs. The description of identical or functionally identical elements is not necessarily repeated with respect to different figures.

Fig. 1 shows a schematic illustration of a path evaluation system;

Fig. 2 shows a schematic illustration of a radio map;

Fig. 3 shows a schematic illustration of an uncertainty map;

Fig. 4 shows a schematic illustration of an update of an uncertainty map based on a measured signal to noise and interference ratio provided during a following of a path;

Fig. 5 shows a schematic illustration of uncertainty map showing three main paths followed by autonomously guided vehicles;

Fig. 6 shows a schematic illustration of uncertainty map a robust path and a shortest path;

Fig. 7 shows a schematic illustration of expected, actual, and uncertainty interval of the signal to interference and noise ratio for the robust and shortest paths, alongside the minimum required signal to interference and noise ratio;

Fig. 8 shows a schematic illustration of a calculation of the robust path; and

Fig. 9 shows a schematic illustration of a method to operate an exploration device.

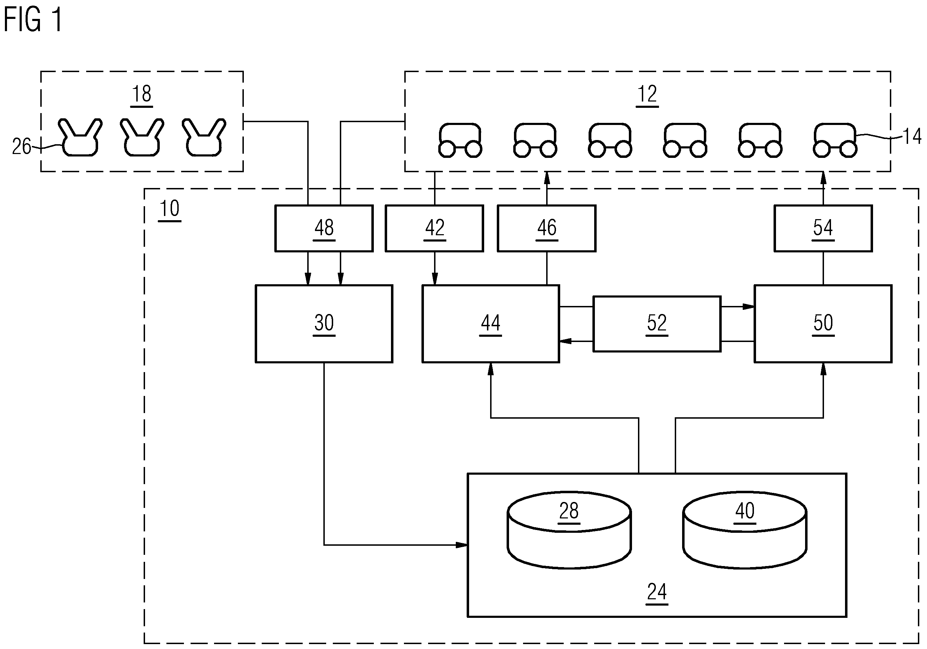

Fig. 1 shows a schematic illustration of a path evaluation system 10 for coordinating autonomously guided vehicles 14.

The path evaluation system 10 may be configured to control the movement of autonomously guided vehicles 14 of the fleet 12 of autonomously guided vehicles 14 within an operational area 16 of the mobile radio access network 18. The fleet 12 may comprise cooperating autonomously guided robots or autonomously guided vehicles 14 whose normal operation may comprise idle static periods and active periods during which they must move from their current position to a new destination.

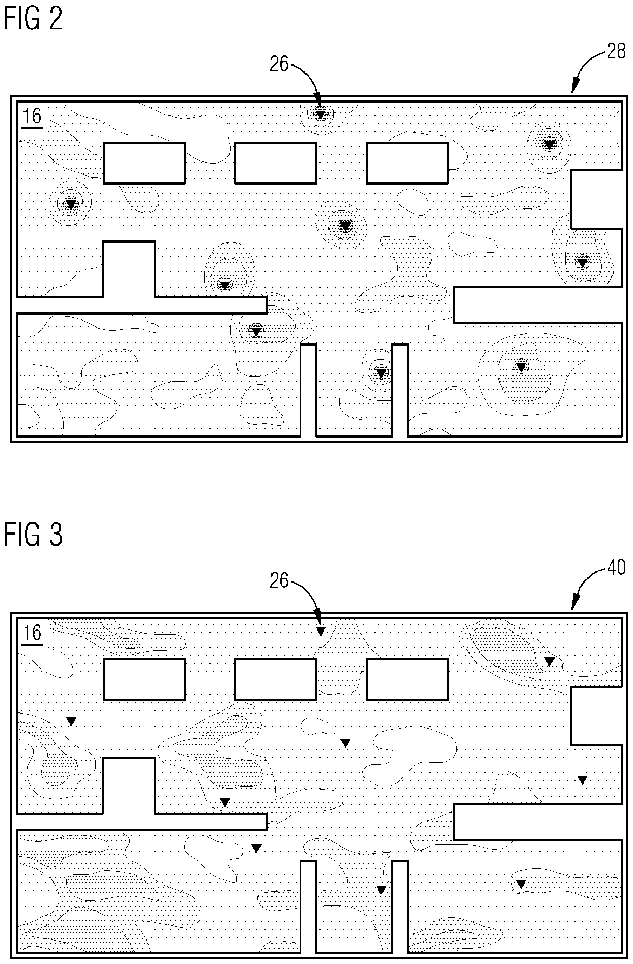

The mobile radio access network 18 may be provided within the operational area 16, comprising transceivers 26 located at specific positions within the area to enable communication with the autonomously guided vehicles 14. The mobile radio access network 18 may be designed as a 5G-network. Based on the locations of the transceivers 26 within the operational area 16 and interference of the mobile radio access network 18 with other networks within the operational area 16, a signal-to-noise and interference ratio of the mobile radio access network 18 within the operational area 16 may depend on the location within the operational area 16. The signal-to-noise and interference ratio of the mobile radio access network 18 within the operational area 16 may be described by a radio map 28. The radio map 28 may be generated by a radio map 28 estimator based on measured signal-to-noise and interference ratios measured at respective measurement positions 32 by the autonomously guided vehicles 14 and the transceivers 26. An example of the radio map 28 is shown in Fig. 2.

The spatial density of measurement positions 32 may vary within the operational area 16. Regions of the operational area 16 along the main paths 38 of the autonomously guided vehicles 14 may have a higher density of measurement positions 32 than regions away from the main paths 38. A low density of measurement positions 32 may correlate with a higher uncertainty of the signal-to-noise and interference ratio evaluated by the radio map 28 estimator. The uncertainty may be represented by the radio map 28 estimator in an uncertainty map 40. An example of an uncertainty map 40 is shown in Fig. 3.

To perform a task, the autonomously guided vehicles 14 may need to move from their current position to a target position. A robust path 34 between the origin and the destination may not be evaluated by the autonomously guided vehicles 14 themselves, but by the path evaluation system 10. Therefore, the autonomously guided vehicles 14 may be configured to send a path request message 42 requesting a provision of the path specifying a spatial progression from the starting position 20 to the destination position 22 to a path calculator device 44 of the path evaluation system 10. It may be necessary to maintain a predefined minimum signal-to-noise and interference ratio for the autonomously guided vehicles 14 to ensure a connection between the autonomously guided vehicles 14 and the mobile radio access network 18. The path calculator device 44 may be configured to determine the robust path 34 for the autonomously guided vehicle 14 by applying a predefined robust optimisation method depending on the radio map 28 and depending on the uncertainty map 40. The robust optimisation method may ensure that the predefined minimum signal-to-noise and interference ratio is maintained along the robust path 34. Therefore, the robust path 34 passes through regions with higher signal-to-noise and interference ratios and regions with lower uncertainties.

The autonomously guided vehicle 14 may receive the path provision message 46 and travel along the robust path 34 provided by the path provision message 46. The autonomously guided vehicle 14 may measure respective measured signal-to-noise and interference ratios measured at respective measurement positions 32 along the path and send respective measurement messages 48 to the radio map 28 estimator. The radio map 28 estimator may update the radio map 28 and the uncertainty map 40 based on the measured signal-to-noise and interference ratios provided by the autonomously guided vehicle 14.

In order to prevent a runaway effect, the path evaluation system 10 may comprise an exploration device 50. The exploration device 50 may be configured to detect the fulfilment of predefined conditions that may be associated with a risk of runaway effects, and to directly or indirectly control the autonomously guided vehicles 14 to avoid a runaway effect.

The exploration device 50 may be configured to send a command message 54 to one of the autonomously guided vehicles 14, wherein the command message 54 may comprise a command to move to a predefined measurement position 32, to measure the respective measured signal-to-noise and interference ratio at the predefined measurement position 32, and to send the measurement message 48 comprising the respective measured signal-to-noise and interference ratio at the predefined measurement position 32 to the radio map 28 estimator. The exploration device 50 may be configured to send a path calculation message 52 to the path calculator device 44 to change the robust optimization used to calculate the robust path 34. In other words, to avoid the runaway effect, the exploration device 50 tmay interact with other devices of the path evaluation system 10 during a path planning phase for autonomously guided vehicles 14 is provided.

Namely, the exploration device 50 may implement three novel tasks. The exploration device 50 may add a runaway-cancelling variation at autonomously guided vehicle 14 path planning. This ensures that a resulting uncertainty estimation after path traversing does not lead to a positive feedback loop, even if this means that autonomously guided vehicles 14 go through positions where uncertainty is not necessarily lowest.

The exploration device 50 may figure out optimal rest positions 56 for autonomously guided vehicles 14 becoming idle, so that once again the uncertainty is reduced, and runaway effects are prevented.

The exploration device 50 may actively command idle autonomously guided vehicles 14 to visit measurement positions 32 with excessively high uncertainty, whenever it is detected that flawed uncertainty estimations may be leading to highly suboptimal robust paths 34.

The solution proposed to address the runaway problem is not to renounce to robust optimization, which is frequently a valid requirement, but to add an Exploration device 50 involved in the robust path selection and general behavior of the autonomously guided vehicles 14. The goal of the Exploration device 50 is to make sure that the uncertainty map is not excessively biased towards the most frequent paths, thus preventing this detrimental positive feedback loop in the uncertainty estimation. Namely, this unit impacts the system behavior in three concrete ways.

Forcing acceptable variability at the path calculation, by providing the adequate Exploration parameters to the path calculator device.

Providing useful rest positions 56 for autonomously guided vehicles 14 that have finished traversing their robust paths 34, so as to result in more uniform uncertainty estimations.

Actively commanding idle autonomously guided vehicles 14 to change their position in order to measure signal to interference and noise ratio levels at predefined measurement positions 32 with high uncertainty values, when required.

The first objective of the Exploration device 50 may be enforced by adding a new term to the objective of the robust optimization problem in order to promote robust paths 34 that reduce the overall uncertainty levels. For example, the solving of the following optimization problem for robust, short path calculation may be proposed:

$$\mathbb{P}^*_{robust,short,exploration} = arg\min_{\mathbb{P}} \mathcal{L}(\mathbb{P}) + \int_{x\in\mathbb{A}} \alpha(x)u(x)\,dx$$

*subject to*

$$s^-(x) \geq \sigma \quad \forall x \in \mathbb{P}$$

Or for robust, QoS-maximizing path calculation:

$$\mathbb{P}^*_{robust,QoS,exploration} = arg\max_{\mathbb{P}} \int_{x\in\mathbb{P}} s(x)\,dx - \int_{x\in\mathbb{A}} \alpha(x)u(x)\,dx$$

*subject to*

$$s^-(x) \geq \sigma_{min} \quad \forall x \in \mathbb{P}$$

The function $\alpha(x)$ may be Exploration parameters, since their value affect how much importance is given to improve uncertainty levels in addition to minimizing distance or maximizing QoS, while still guaranteeing that the minimum required signal to interference and noise ratio level is met. The Exploration parameters $\alpha(x)$ may be a continuous or discrete function, or even a constant value, as desired. The Exploration device 50 may be in charge of computing the appropriate values of the Exploration parameters and to forward them to the Path calculator device 44 in a path calculation message 52.

The second objective of the exploration device may be accomplished by calculating a rest position $x_{resting}$ for the autonomously guided vehicles becoming idle as follows:

$$x_{resting} = arg\min_{x} \int_{y\in\mathbb{A}} \alpha(y)\Gamma(u(y),s(x),x)\,dy$$

*subject to*

$$\left| x_{end} - x_{resting} \right| \leq \Delta,$$

where $\Gamma(u(y),s(x),x)$ yields the new uncertainty map 40 after visiting a rest position 56, being a measurement position 32 $x$, as defined at the beginning of this section, and $\Delta$ may be a he maximum allowed distance between the actual destination position 22 of the autonomously guided vehicle $x_{end}$ and its rest position 56 $x_{resting}$. In words, the rest position 56 may be selected so that the overall uncertainty level weighted by the Exploration parameters $\alpha(x)$ is reduced as much as possible while not going too far away from $x_{end}$. This rest position is either provided to the path calculator device and then forwarded to the autonomously guided vehicles, or it can be directly sent from the exploration device to the autonomously guided vehicles.

The third objective of the exploration device may be met by sending direct command messages 54 to actively move the idle autonomously guided vehicles 14 to predefined measurement positions 32. This may be done in a random or periodic manner, or it can be triggered whenever the robust path 34 calculated from the path calculator device 44 differs excessively from the unconstrained path 36, which may be the path that minimizes length or maximizes QoS without minimum signal to interference and noise ratio restrictions:

$$\mathbb{P}^*_{unconstrained,short} = arg \min_{\mathbb{P}} \mathcal{L}(\mathbb{P})$$

$$\mathbb{P}^*_{unconstrained,QoS} = arg \max_{\mathbb{P}} \int_{x \in \mathbb{P}} s(x)\, dx$$

If $\mathcal{L}\left(\mathbb{P}^*_{robust,[short,QoS],exploration}\right) - \mathcal{L}\left(\mathbb{P}^*_{unconstrained,[short,Qos]}\right) > \Psi$ , where $\Psi$ is a predefined distance threshold, then idle autonomously guided vehicles 14 are commanded to move towards unconstraint path 36: $\mathbb{P}^*_{unconstrained,[short,QoS]}$ , so that signal to interference and noise ratio and uncertainty values get updated before robust path 34 $\mathbb{P}^*_{robust,[short,QoS],exploration}$ is computed again. The selection of these useful rest positions 56 positions may be done by e. g. minimizing the uncertainty along that unconstrained path 36:

$$\mathbf{x}_{idle} = arg \min_{\mathbf{x}} \int_{y \in \mathbb{P}^*_{unconstrained,[short,Qos]}} \Gamma(u(y), s(\mathbf{x}), \mathbf{x})\, dy,$$

Where $x_{idle}$ is the list of new rest positions 56 for idle autonomously guided vehicles 14.

Fig. 2 shows a schematic illustration of a radio map.

For each position $x \in \mathbb{A}$ in the factory area $\mathbb{A}$, there is an estimation of the signal to noise and interference ratio that is expected to be experienced there, which is denoted as the radio map 28: s(x).

Fig. 3 shows a schematic illustration of an uncertainty map.

Since the radio map of expected signal to interference and noise ratios may not be fully accurate, there is also an estimation of the confidence interval $\langle s^-(x), s^+(x) \rangle$ for that position $x \in \mathbb{A}$, which reflects the minimum and maximum signal to interference and noise ratio values that are foreseen to be measured at x for a desired confidence level e. g. 95% or higher. A length of that interval for each position x is referred to as the signal to interference and noise ratio uncertainty at that position, and the function mapping every position to its uncertainty value is called the uncertainty map 40: $u(x) = s^+(x) - s^-(x)$.

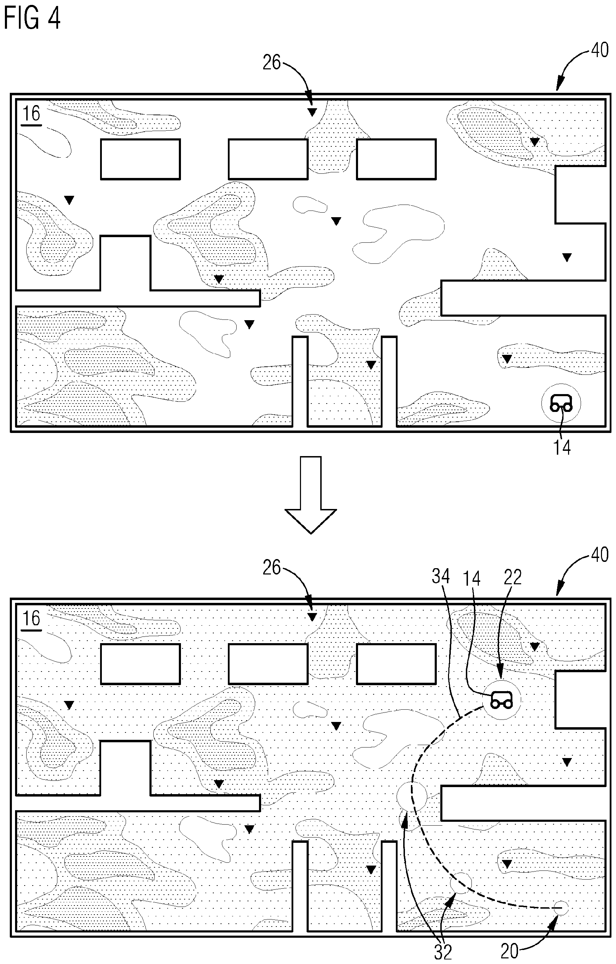

Fig. 4 shows a schematic illustration of an update of an uncertainty map based on a measured signal to noise and interference ratio provided by an autonomously guided vehicle during a following of a path.

Both the radio map 28 and the uncertainty map 40 may be calculated by the radio map 28 estimator device, which may gather radio measurements from the autonomously guided vehicles 14 and, optionally, from the fixed wireless receivers and convert them into signal to interference and noise ratio and uncertainty estimations for the whole operational area 16 A. The radio map 28, uncertainty map 40, and radio map 28 estimator are depicted as part of the whole considered system in Fig. 1.

The autonomously guided vehicles 14 may receive commands from upper layers to move from their current location to a new destination position 22, e. g. to carry or pick up parts. Owing to their limited local knowledge, autonomously guided vehicles 14 do not calculate the optimal robust path 34 between their starting position 20 and destination positions 22 themselves, but rely on the path calculator device 44 that has access to the radio map 28 and uncertainty map 40. The path calculator device 44 may calculate the optimal robust path 34 by combining performance indicators such as time, distance, QoS, etc. into either objective or constraints of a path optimization problem. In addition, the path calculator device 44 may employ robust optimization to find the optimal robust path 34, that is, it ensures that autonomously guided vehicles 14 will not traverse areas with insufficient signal to interference and noise ratio levels. For example, the path calculator device 44 could compute the shortest possible robust path 34 that provides a minimum signal to interference and noise ratio value $\sigma_{min}$ as:

$$\mathbb{P}^*_{robust,short} = arg \min_{\mathbb{P}} \mathcal{L}(\mathbb{P})$$

subject to

$$s^-(x) \geq \sigma_{\min} \quad \forall x \in \mathbb{P},$$

where $\mathcal{L}(\mathbb{P})$ represents the length of robust path 34 IP between the starting position 20 and the destination position 22. Alternatively, the objective could be to maximize the signal to interference and noise ratio, and hence QoS, along the traversed robust path:

$$\mathbb{P}^*_{\text{robust,QoS}} = \arg\max_{\mathbb{P}} \int_{x \in \mathbb{P}} s(x) \, dx$$

subject to

$$s^-(x) \geq \sigma_{\min} \quad \forall x \in \mathbb{P}$$

While following assigned robust paths 34 from their starting positions to their destination positions, the autonomously guided vehicles 14 may measure the signal to interference and noise ratio of multiple measurement positions 32 along their robust path 34 as part of their normal operation e. g. due to the presence of pilot signals in radio technologies such as Bluetooth or 5G. At the position and instant of a measurement, the signal to interference and noise ratio uncertainty reduces to a minimum value, which depends e. g. on the thermal noise of the receiver. The uncertainty may also be temporarily reduced for nearby positions since signal to interference and noise ratio measurements can be used to improve the accuracy of surrounding estimations. After a measurement, the signal to interference and noise ratio uncertainty increases over time, since the probability of an environmental change that could affect the radio conditions increases. As a result, after visiting and performing signal to interference and noise ratio measurements on a new measurement position, the uncertainty map gets updated to $u'(x) = \Gamma(u(x), s(x_{\text{visited}}), x_{\text{visited}}) \forall x \in \mathbb{A}$, where $\Gamma(\cdot)$ is a generic update function depending on the previous uncertainty map 40, the measured signal to interference and noise ratio value, and the measurement position 32 where that signal to interference and noise ratio measurement was taken. This is depicted in Fig. 4, where the autonomously guided vehicle 14 takes two radio measurements on its way to its destination position 22, resulting in reduced uncertainty at measurement positions 32 along the traversed robust path 34, as well as at the destination position 22.

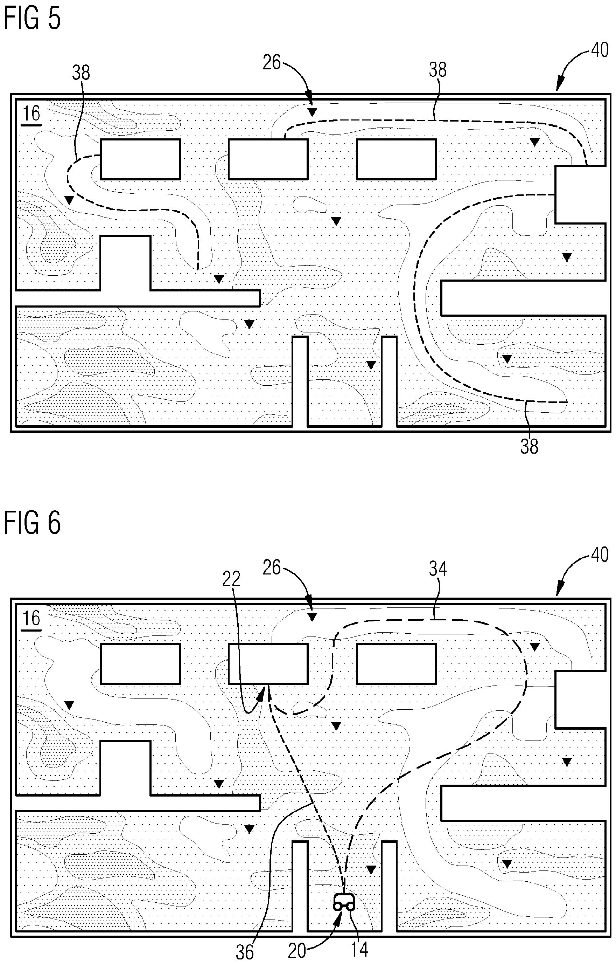

Fig. 5 shows a schematic illustration of uncertainty map showing three main paths followed by autonomously guided vehicles.

The use of robust optimization for finding robust paths 34 for autonomously guided vehicles 14 may result in an undesired positive feedback loop, that is, in a runaway effect. Since the measurements taken by autonomously guided vehicles 14 reduce the uncertainty along their paths, the probability that positions belonging to these robust paths 34 are selected for next robust paths 34 increases. In other words, recently visited positions are preferred when selecting new robust paths 34 due to their lower uncertainty levels, even if this results in longer paths of even in robust paths 34 with a lower expected signal to interference and noise ratio. This is illustrated in the uncertainty map 40 depicted in Fig. 5, where regions with low uncertainty correspond to regions close to the three most frequent main paths 38.

Fig. 6 shows a schematic illustration of uncertainty map a robust path and a shortest path.

The undesired positive feedback loop may have a negative impact for calculating the optimal robust path 34 required by the autonomously guided vehicle 14. As it is shown in Fig. 6, the preferred, robust path 34 differs substantially from the shortest path, since the former is selected so as to guarantee that the signal to interference and noise ratio experienced by the autonomously guided vehicle 14 will not go below the required minimum $\sigma_{\min}$.

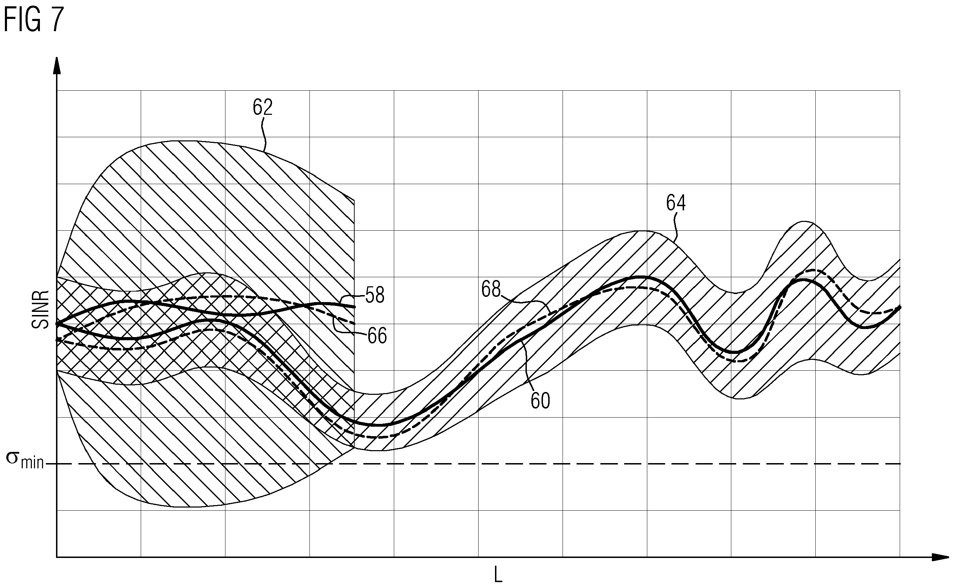

Fig. 7 shows a schematic illustration of expected, actual, and uncertainty interval of the signal to interference and noise ratio for the robust and shortest paths, alongside the minimum required signal to interference and noise ratio.

Fig. 7 shows a reason for the difference between the optimal robust path 34 and the shortest path as shown in Fig. 6. In Fig. 7, an expected signal to interference and noise ratio level along the robust path 58 and an actual signal to interference and noise ratio level along the robust path 66 are plotted against an expected signal to interference and noise ratio level along the unconstrained path 60 and an actual signal to interference and noise ratio level along the unconstrained path 68, alongside an uncertainty interval of the robust path 62 and an uncertainty interval of the unconstrained path 64. It can be seen that, since the uncertainty of the shortest path is higher owing to being far away from the most frequent autonomously guided vehicle 14 paths, it is discarded against the robust path 34, even if the robust path 34 is not only longer, but it also provides a worse average signal to interference and noise ratio.

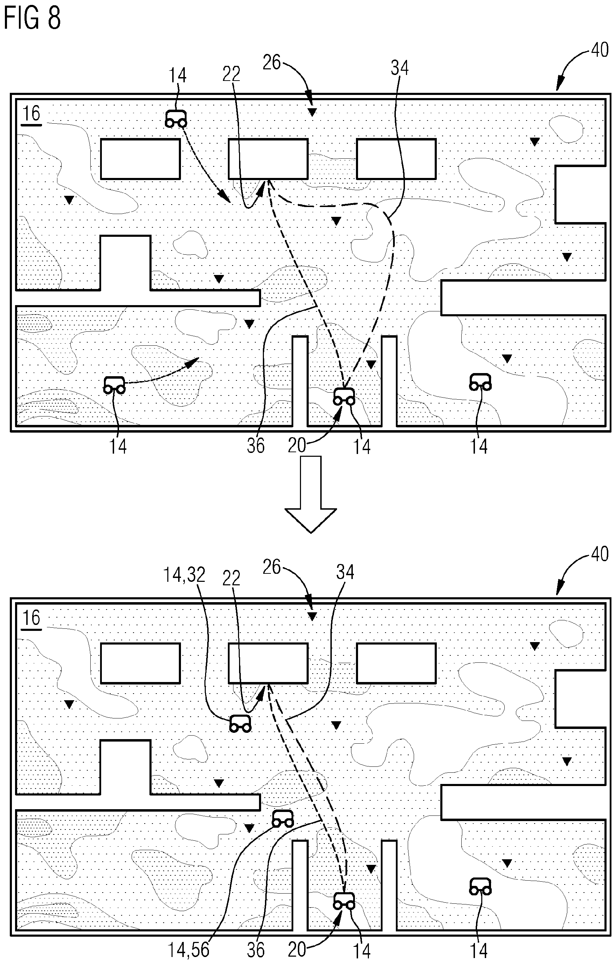

Fig. 8 shows a schematic illustration of a calculation of the robust path using the proposed invention.

Note that the introduced exploration bias and the positioning of the idle autonomously guided vehicles 14 lead to a uniformly lower uncertainty in in the uncertainty map 40 compared to the uncertainty map 40 shown in Fig. 5.

Fig. 5 shows a results of the proposed exploration device 50. The left figure shows the uncertainty map 40 resulting from applying the first two objectives of the exploration device 50: path variability and useful rest positions 56. As a result, the uncertainty map 40 is much less biased towards frequent paths in comparison to Fig. 5. In Fig. 8, also the shortest path for a new autonomously guided vehicle 14 task and the robust path 34 as obtained by the path calculator device 44 with the current uncertainty map 40 is shown. Since the lengths of both paths differ substantially, the exploration device 50 may be triggered, which may send idle autonomously guided vehicles 14 to a vicinity of the shortest path, which may reduce the uncertainty levels in that region. As a result, in the right figure the new robust path 34 that uses the updated uncertainty map 40 is shown, which now resembles much more the shortest path, as a positive result.

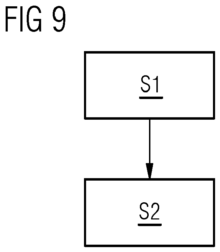

Fig. 9 shows a schematic illustration of a method to operate an exploration device.

The method may comprise the following steps, performed by the exploration device 50.

A first step S1 may comprise a monitoring the uncertainty map 40 and the robust path 34 for fulfilment of at least one predefined condition indicating an incipient runaway effect.

A second step S2 may comprise a performing of a predefined measure to prevent an occurrence of the runaway effect if the at least one condition is fulfilled.

In short, the proposed approach defines a new exploration device 50 that interacts with the other devices during the path planning phase for autonomously guided vehicles 14. This is different from the state-of-the-art approaches which rely solely on an upper-level function that has access to global information about the considered area.

The invention addresses the problem of uncertainty in radio map estimation and proposes a solution to prevent the runaway effect that can cause highly suboptimal paths. This is different from the current state-of-the-art approaches which do not focus on potential issues in the long term. In this invention, we introduce runaway-cancelling variation at autonomously guided vehicle 14 path planning to ensure that autonomously guided vehicles 14 do not get stuck with a limited set of possible regions to visit, leading to highly suboptimal but still constraint-meeting paths. This allows for the possibility of finding shorter, lower-energy paths with acceptable or better QoS, which might have been missed otherwise due to high uncertainty levels.

Compared to simple path planning approaches focused on short-term goals, calculating the optimal rest positions 56 for autonomously guided vehicles 14 becoming idle helps in reducing uncertainty levels, preventing runaways, and ensuring that autonomously guided vehicles 14 are always ready to perform their tasks efficiently.

In the same way, the active command to idle autonomously guided vehicles 14 to visit positions with excessively high uncertainty ensures that flawed uncertainty estimations do not lead to highly suboptimal paths. This helps in maintaining the QoS levels and reduces the possibility of errors during autonomously guided vehicle 14 operations.

List of Reference

| | |
|---|---|
| 10 | path evaluation system |
| 12 | fleet |
| 14 | autonomously guided vehicle |
| 16 | operational area |
| 18 | mobile radio access network |
| 20 | starting position |
| 22 | destination position |
| 24 | map database |
| 26 | transceiver |
| 28 | radio map |
| 30 | radio map estimator |
| 32 | measurement position |
| 34 | robust path |
| 36 | unconstraint path |
| 38 | main path |
| 40 | uncertainty map |
| 42 | path request message |
| 44 | path calculator device |
| 46 | path provision message |
| 48 | measurement message |
| 50 | exploration device |
| 52 | path calculation message |
| 54 | command message |

56      rest position
58      expected signal to interference and noise ratio level along the robust path
60      expected signal to interference and noise ratio level along the unconstrained path
62      uncertainty interval of the robust path
64      uncertainty interval of the unconstrained path
66      actual signal to interference and noise ratio level along the robust path
68      actual signal to interference and noise ratio level along the unconstrained path

**Claims**

1.  Path evaluation system (10) for coordinating autonomously guided vehicles (14) within an operational area of a mobile radio access network (18), wherein the path evaluation system (10) comprises:

    a path calculator device (44) configured to:

        - receive a path request message (42), requesting a provision of a robust path (34) for an autonomously guided vehicle (14), wherein the robust path (34) specifies an optimal spatial progression with respect to at least one predefined path criterion from a starting position (20) to a destination position (22) along which a predefined minimum signal-to-noise and interference ratio is maintained;
        - determine the robust path (34) for the autonomously guided vehicle (14) by robust optimization based on a radio map (28) and an uncertainty map (40), wherein the radio map describes a signal to noise and interference ratio of the mobile radio access network (18) within the operational area, and wherein the uncertainty map (40) describes an uncertainty of the signal to noise and interference ratio of the mobile radio access network (18) within the operational area; and
        - send a path provision message (46) comprising the robust path (34) to the autonomously guided vehicle (14);

    a radio map estimator device configured to:

        - receive a radio measurement message (48) comprising a measured signal to noise and interference ratio measured by the autonomously guided vehicle (14) (v) at a respective position along the robust path (34); and
        - update the radio map and the uncertainty map (40) based on the measured signal to noise and interference ratio;

    **characterised in that**
    the path evaluation system (10) comprises an exploration device (50), configured to monitor the uncertainty map (40) and the robust path (34) for fulfilment of at least one predefined condition indicating an incipient runaway effect and, if the at least one condition is fulfilled, to perform a predefined measure to prevent an occurrence of the runaway effect.

2.  A path evaluation system (10) according to claim 1,
    **characterised in that**
    the exploration device (50) is configured to, as the a predefined measure, adapt the robust optimization to evaluate the robust path (34) specifying the optimal spatial progression with respect to the least one predefined path criterion and with respect to an uncertainty criterion, the uncertainty criterion being related to a reduction of an overall uncertainty level of the uncertainty map (40).

3.  A path evaluation system (10) according to any one of the preceding claims,
    **characterised in that**

    the exploration device (50) is configured to, as the a predefined measure, evaluate a rest position (56) for the autonomously guided vehicle (14) within a predefined distance to the target position of the autonomously guided vehicle (14) based on the uncertainty map (40), and
    to control the autonomously guided vehicle (14) to travel to the rest position (56) when set in a predefined idle state, to measure the signal to noise and interference ratio at the rest position (56) and to send a measurement message (48) comprising the measured signal to noise and interference ratio to the map calculator device.

4.  A path evaluation system (10) according to any one of the preceding claims,

**characterised in that**
the exploration device (50) is configured to, as the a predefined measure, evaluate a measurement position (32) based on the uncertainty map (40), and to control an idle autonomously guided vehicle (14) of the fleet (12) to travel to the measurement position (32), to measure the signal to noise and interference ratio at the measurement position (32) and to send a measurement message (48) comprising the measured signal to noise and interference ratio to the map calculator device.

5. A path evaluation system (10) according to any one of the preceding claims,
   **characterised in that**

   the at least one predefined condition comprises an exceeding of a permissible length difference by a length difference between a length of the robust path (34) and a length of an unconstrained path, wherein
   the unconstrained path specifies an optimal spatial progression from the starting position (20) to the destination position (22) for the autonomously guided vehicle (14) with respect to the at least one predefined path criterion independent of the minimum signal-to-noise and interference ratio along the reference path.

6. A path evaluation system (10) according to claim 5,
   **characterised in that**

   the exploration device (50) is configured to,
   upon an exceeding of the permissible length difference, control the path calculator device (44) to cancel the sending of the path provision message (46) comprising the path;
   evaluate the measurement position (32) based on the uncertainty map (40) and the unconstrained path, control the idle autonomously guided vehicle (14) of the fleet (12) to travel to the measurement position (32), to measure the signal to noise and interference ratio at the measurement position (32) and to send a measurement message (48) comprising the measured signal to noise and interference ratio to the map calculator device;
   .control the path calculator device (44) to recalculate the path after an update of the uncertainty map (40) by the radio map estimator device and to send a path provision message (46) comprising the path to the autonomously guided vehicle (14);

7. A path evaluation system (10) according to any one of the preceding claims,
   **characterised in that**
   the at least one predefined condition comprises an exceeding of a permissible uncertainty level by an overall uncertainty level of the uncertainty map (40).

8. A path evaluation system (10) according to any one of the preceding claims,
   **characterised in that**
   the at least one predefined condition comprises an exceeding of a permissible local uncertainty by a local uncertainty of the uncertainty map (40).

9. An exploration device (50) for a path evaluation system (10),
   **characterised in that**
   the exploration device (50) is configured to monitor the uncertainty map (40) and the robust path (34) for fulfilment of at least one predefined condition indicating an incipient runaway effect and, if the at least one condition is fulfilled, to perform a predefined measure to prevent an occurrence of the runaway effect.

10. A method to operate an exploration device (50) for a path evaluation system (10), comprising the following steps, performed by the exploration device (50):

    monitoring the uncertainty map (40) and the robust path (34) for fulfilment of at least one predefined condition indicating an incipient runaway effect; and,
    performing a predefined measure to prevent an occurrence of the runaway effect if the at least one condition is fulfilled.

11. A computer program product comprising program code for performing a method according to claim 10.

12. A computer-readable storage medium comprising at least the computer program product according to claim 11.

FIG 1

FIG 2

FIG 3

## FIG 4

FIG 5

FIG 6

FIG 7

EP 4 632 518 A1

FIG 8

FIG 9

```
┌─────────────┐
│     S1      │
└──────┬──────┘
       │
       ▼
┌─────────────┐
│     S2      │
└─────────────┘
```

Europäisches
Patentamt

European
Patent Office

Office européen
des brevets

# EUROPEAN SEARCH REPORT

**Application Number**

EP 24 16 8967

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | EP 3 322 204 A1 (BAYERISCHE MOTOREN WERKE AG [DE]) 16 May 2018 (2018-05-16) * Paragraphs [0012], [0019]-[0021], [0026], [0028], [0032], [0039]-[0040], [0057], [0060]; Figures 1-2. * | 1-8 | INV. G05D1/246 G05D1/247 G05D1/644 G05D1/693 G05D105/28 G05D107/70 G05D111/30 G05D109/10 |
| X | US 2015/197010 A1 (RUUSPAKKA ROGER M [US] ET AL) 16 July 2015 (2015-07-16) | 9-12 | |
| Y | * Paragraphs [0001], [0044], [0050], [0058], [0061], [0063]; Figure 1. * | 1-8 | |
| Y | US 2014/195049 A1 (IM HYUN-JA [KR] ET AL) 10 July 2014 (2014-07-10) * Paragraph [0040]. * | 7,8 | |
| A | US 2012/158219 A1 (DURLING MICHAEL RICHARD [US] ET AL) 21 June 2012 (2012-06-21) * Paragraph [0044]. * | 1-12 | |
| A | US 2021/302956 A1 (SUDHAKARAN SUSRUTH [US] ET AL) 30 September 2021 (2021-09-30) * Paragraph [0056], figure 2C. * | 1-12 | |

**TECHNICAL FIELDS SEARCHED (IPC)**

G05D
G01C
H04W
H04B

The present search report has been drawn up for all claims

| Place of search | Date of completion of the search | Examiner |
|---|---|---|
| Munich | 23 July 2024 | Roch, Vincent |

EPO FORM 1503 03.82 (P04C01)

## EP 4 632 518 A1

EP 24 16 8967

23-07-2024

| Patent document cited in search report | Publication date | Patent family member(s) | Publication date |
|---|---|---|---|
| EP 3322204 A1 | 16-05-2018 | NONE | |
| US 2015197010 A1 | 16-07-2015 | US 2015197010 A1 | 16-07-2015 |
| | | WO 2015108819 A1 | 23-07-2015 |
| US 2014195049 A1 | 10-07-2014 | KR 20140089241 A | 14-07-2014 |
| | | US 2014195049 A1 | 10-07-2014 |
| US 2012158219 A1 | 21-06-2012 | BR PI1105386 A2 | 09-04-2013 |
| | | CA 2761351 A1 | 21-06-2012 |
| | | CN 102566581 A | 11-07-2012 |
| | | EP 2469291 A1 | 27-06-2012 |
| | | JP 5993143 B2 | 14-09-2016 |
| | | JP 2012131484 A | 12-07-2012 |
| | | US 2012158219 A1 | 21-06-2012 |
| US 2021302956 A1 | 30-09-2021 | CN 115127555 A | 30-09-2022 |
| | | EP 4064588 A2 | 28-09-2022 |
| | | US 2021302956 A1 | 30-09-2021 |

For more details about this annex : see Official Journal of the European Patent Office, No. 12/82

REFERENCES CITED IN THE DESCRIPTION

**Patent documents cited in the description**

- US 9216508 B2, R. M Ruuspakka

**Non-patent literature cited in the description**

- **L. TINDALL**. *Radio Frequency Signal Strength Based Multitarget Tracking With Robust Path Planning*

- **L. SHI**. *UAV Path Planning With QoS Constraint in Device-to-Device 5G Networks Using Particle Swarm Optimization*
- **L. SHI**. *QoS-Aware UAV Coverage path planning in 5G mmWave network*